# EUROPÄISCHE PATENTSCHRIFT

(11) **EP 3 258 258 B1**
(45) Veröffentlichungstag und Bekanntmachung des Hinweises auf die Patenterteilung: **31.07.2024**
(21) Anmeldenummer: 16174250.7
(22) Anmeldetag: 13.06.2016
(51) Int. Cl.: G01N 29/04

(54) **SENSORHAUT**
SENSOR SKIN
PEAU SENSORIELLE

(43) Veröffentlichungstag der Anmeldung: 20.12.2017
(73) Patentinhaber: Airbus Defence and Space GmbH, 82024 Taufkirchen (DE)
(72) Erfinder: Friedberger, Alois, 85667 Oberpframmern (DE); Buderath, Matthias, 83620 Feldkirchen-Westerham (DE); Helwig, Andreas, 80469 München (DE)
(74) Vertreter: Isarpatent

(56) Entgegenhaltungen:
- US-A1- 2008 100 587
- US-A1- 2008 309 200
- US-A1- 2009 301 197
- US-A1- 2013 192 356
- US-A1- 2014 047 924
- US-A1- 2015 078 136
- US-A1- 2015 367 586
- ZHE WANG ET AL: "A Flexible Ultrasound Transducer Array with Micro-Machined Bulk PZT", SENSORS, vol. 15, no. 2, 23 January 2015 (2015-01-23), pages 2538 - 2547, XP055320581, DOI: 10.3390/s150202538
- XUEFENG ZHUANG ET AL: "Fabrication of Flexible Transducer Arrays With Through-Wafer Electrical Interconnects Based on Trench Refilling With PDMS", JOURNAL OF MICROELECTROMECHANICAL SYSTEMS., vol. 17, no. 2, 1 April 2008 (2008-04-01), US, pages 446 - 452, XP055320586, ISSN: 1057-7157, DOI: 10.1109/JMEMS.2008.918381

## Beschreibung

Die Erfindung betrifft ein System aufweisend ein Bauteil aus wenigstens einem faserverstärkten Kunststoff und ein Messsystem mit einer Mehrzahl von Sensoren, die an dem Bauteil voneinander beabstandet angeordnet sind, wobei die Sensoren über eine gekrümmte Fläche des Bauteils verteilt sind, wobei das Bauteil mit einem bauteilfremden Substrat versehen ist, an welchem die Sensoren angeordnet sind, wobei das Substrat flexibel ausgebildet ist, und wobei die an dem flexiblen Substrat angeordneten Sensoren eine Messeinrichtung bilden.

Im Prinzip sind Messsysteme bekannt, deren Sensoren an einem Bauteil aus faserverstärktem Kunststoff aufgebracht werden können. Um mit einem Messsystem an derartigen Bauteilen beispielsweise einen zukünftigen Schadeneintritt mit vertretbarer Ortsauflösung zuverlässig beurteilen zu können, müssen die Sensoren in entsprechender Anzahl mit hohem Aufwand an der entsprechenden Fläche angeordnet werden. Will man außerdem sowohl Aussagen über den Herstellungsprozess des Bauteils, als auch über in deren Betrieb auftretende Störfaktoren anhand von Sensorerfassungen treffen, ist der vorstehende Aufwand gegebenenfalls sogar mehrfach zu treiben. In gleichem Maße steigt auch der für die zugeordneten messtechnischen Einrichtungen, etwa für die Signalverarbeitung zu treibende Aufwand. Hierzu kennt man etwa aus der US 2015/367586 A1 eine Vorrichtung mit einem Formwerkzeug, das eine Formfläche umfasst, an welcher ein Array von Ultraschalltransducern angeordnet ist. Eine Prüfung einer Struktur kann hierbei durch Abtasten des Ultraschalltransducerarrays über die Oberfläche der betreffenden, in dem Formwerkzeug gebildeten Struktur durchgeführt werden.

Es ist daher die Aufgabe der vorliegenden Erfindung, ein verbessertes System mit einem Messsystem und einem Bauteil aus einem faserverstärkten Kunststoff zur Verfügung zu stellen, bei dem sich mit vertretbarem Aufwand, kostengünstig und zuverlässig Prozessparameter und/oder Zustandsgrößen bei Herstellung und/oder Betrieb des Bauteils gewinnen lassen.

Diese Aufgabe wird durch ein System mit den Merkmalen des Anspruchs 1 gelöst. Bei der Erfindung wird also eine Messeinrichtung in Form einer Mehrzahl von Sensoren an einem flexiblen Substrat, das hierbei eine geeignete Folie aus einem thermoplastischen Hochleistungskunststoff bildet, angeordnet und bereits bei der Herstellung an dem Bauteil integriert und hierbei das Substrat besonders zuverlässig an dem Bauteil angeordnet, wobei das flexible Substrat bei der Herstellung des Bauteils mit dessen Matrix eine stoffschlüssige Verbindung eingeht. Auf diese Weise wird quasi dem Bauteil eine zusätzliche Fähigkeit verliehen, nämlich diejenige, mit vertretbarem Aufwand, kostengünstig und zuverlässig sowohl Prozessparameter während deren Herstellung, als auch den Einfluss von potentiell schädlichen Ereignissen auf deren strukturelle Integrität im Betrieb im Grunde selbst zu überwachen, so dass die entsprechenden Daten prinzipiell jederzeit zur Verfügung stehen. Dabei bildet das mit den Sensoren versehene flexible Substrat eine Art Sensorhaut. Die Krümmung der Fläche, die die Sensorhaut bildet, ist dabei im gaußschen Sinne zu verstehen, so dass in einem Extremfall eine Fläche mit verschwindender gaußscher Krümmung einen Untergruppe eines Torso, nämlich eine Ebene, bildet. Erfindungsgemäß ist dabei die Sensorhaut mit dem flexiblen Substrat an einer Bauteiloberfläche angeordnet.

Weitere vorteilhafte Merkmale beinhalten die Unteransprüche.

In vorteilhaften Weiterbildungen kann die Messeinrichtung mit ihren Sensoren dazu vorgesehen sein, den Herstellungsprozess, einen Schadenseintritt während des Betriebs des Bauteils oder aber auch beide Prozesse zu überwachen, so dass anhand entsprechender Zustandsgrößen als Maß potentiell Werte ab der Entstehung des Bauteils bis zu einem Schadenseintritt gewonnen werden können.

In einer anderen Ausgestaltung kann bei dem erfindungsgemäßen System die Mehrzahl von Sensoren der Messeinrichtung als Ultraschalltransducer ausgebildet sein, so dass mit diesen Sensoren eine ganze Anzahl von etablierten Messverfahren zur Verfügung steht, um eine strukturelle Veränderung an dem betreffenden Bauteil feststellen zu können. Im Zusammenhang mit dieser Anmeldung ist die Bezeichnung Sensor sowohl in ihrem eigentlichen Wortsinn, als auch im Sinne einer Sensor-/Aktuator-Anordnung, also eines Wandlers (Transducer), zu verstehen, mit welchem ein Signal sowohl aufgenommen, als auch erzeugt werden kann. Bei solchen Wandlern stehen dann auch verschiedene Wandlungsprinzipien zur Verfügung, mit denen im Falle eines Ultraschall-Messverfahrens akustische in elektrische Signale gewandelt werden können, nämlich beispielsweise das elektrostatische, das piezoelektrische oder das piezoresistive Wandlungsprinzip. Es sind aber auch Wandler mit davon verschiedenen Wandlungsprinzipien denkbar.

Bevorzugte Weiterbildungen des Systems können Ultraschall-Transducer als mikromechanisch hergestellte kapazitive Ultraschall-Transducer oder als piezoelektrische Dünnschicht aufweisen. Dabei sind kapazitive mikromechanische Ultraschallwandler (Capacitive Micromachined Ultrasonic Transducers, CMUT) mikromechanische Strukturen, die zur Erzeugung und zum Empfang akustischer Signale im Ultraschallbereich eingesetzt werden können. Mit ihnen können hochqualitativ, miniaturisierte Ultraschallsender/-empfänger realisiert werden, die gut in CMOS-Schaltkreise integrierbar und hochtemperaturbeständig sind. Die Verwendung von mittels eines Abscheideprozesses aufzubringenden dünnen Schichten erlaubt ebenfalls die gezielte Anwendung der Piezoelektrizität bestimmter Materialien für die Fertigung miniaturisierter Systeme mit sowohl sensorischen, als auch mit aktorischen Eigenschaften

Weiterhin kann es von Vorteil sein, wenn ein Teil der Sensoren als Temperatursensoren ausgebildet ist, sodass eine Schadensüberwachung auch anhand von Temperaturmessungen stattfinden kann, beispielsweise als Widerstandstemperaturmessung, bei der mittels Vier-Leiter-Messtechnik gemessen wird. Gegebenenfalls kann hierdurch eine Überprüfung der Messungen mit anderen Arten von Sensoren stattfinden.

Es ist weiterhin denkbar, dass beim Einsatz von Ultraschallsensoren zur Detektion von Delaminationen an dem betreffenden Bauteil ein so genannter SystemOn Chip-Ansatz zum Einsatz kommt, bei dem am Ort des Sensors oder an einer Stelle der Sensorfolie, die mit dem zu überwachenden Bauteil verbunden ist, Logikelemente und/oder mikromechanische Strukturen in einem oder mehreren Chips vereint sind, so dass mechanische und elektrische Informationen unmittelbar nach ihrer Entstehung/Erfassung bereits lokal verarbeitet werden können.

In vorteilhafter Weise kann bei einer bevorzugten Weiterbildung des erfindungsgemäßen Systems eine Detektion von Delaminationen an dem jeweiligen Bauteil durch Ultraschall mittels eines Puls-Echo-Verfahrens stattfinden, das gut beherrschbar ist und zuverlässige Ergebnisse liefert. Bei diesem Verfahren wird beispielsweise eine Zeitverzögerung eines Signals gemessen, wobei gegebenenfalls auftretende Delaminationen in der Struktur des Bauteils diese Zeitverzögerung verringern. Möglich ist auch, dass stattdessen die Änderung der Amplitude gemessen wird. Es sind auch andere Verfahren, etwa durch den Einsatz von Lamb-Wellen möglich.

Eine andere zweckmäßige Ausführung des Systems kann vorsehen, dass alternativ zu piezoelektrischen Sensoren die Ultraschallmessungen der Messeinrichtung mit kapazitiven Ultraschallwandlern stattfindet. So kann beispielsweise mit kapazitiven Sensoren die Herstellung von faserverstärkten Kunststoffbauteilen in einem Harzinjektionsverfahren überwacht werden. In einer anderen bevorzugten Variante können beispielsweise kapazitive mikromechanische Ultraschallwandler (CMUT capacitive micromechanic ultrasonic transducer) als mikromechanische Strukturen zur Erzeugung und zum Empfang akustischer Signale im Ultraschallbereich eingesetzt werden. Auch diese erlauben eine Miniaturisierung und die Integration in einen hochintegrierten Schaltkreis, der wiederum vorteilhaft in die Sensorhaut, also das flexible Substrat, integriert werden kann. CMUTs habe überdies Vorteile hinsichtlich ihrer kurzen Einschwingzeiten, günstigen Herstellungskosten und geringen Fertigungstoleranzen. Der kapazitive Ansatz ist vor allem für Herstellung- und Betriebsbedingungen bei erhöhten Temperaturen von Vorteil.

Um mit der erfindungsgemäß vorgesehenen Messeinrichtung beispielsweise Delaminationen als Schädigungen der Struktur des Bauteils in der Größenordnung von einem Zoll oder 1 cm Durchmesser zuverlässig detektieren zu können, ist die Messeinrichtung an dem flexiblen Substrat in dessen beiden flächigen Erstreckungsrichtungen mit einer Matrix von in diesen Richtungen jeweils gleichmäßig beabstandeten Sensoren, insbesondere in beiden Richtungen mit einem identischen Abstand vorgesehen, sodass eine genügend hohe Sensordichte erreicht werden kann. Dabei kann sich die Sensordichte besonders bevorzugt in etwa in der Größenordnung eines zu erwartenden Schadensereignisses in Form bspw. einer Delamination bewegen. Es sind aber auch andere Abstände, die in keiner der Dimensionen notwendigerweise eine Art von Gleichmäßigkeit aufweisen müssen, denkbar.

Zur Vermeidung eines erhöhten Verkabelungsaufwandes sowie der Anordnung weiterer messtechnischer Einrichtungen in der Umgebung des mit dem Messsystem versehenen Bauteils können zweckmäßig an dem flexiblen Substrat Leiterbahnen, Multiplexer oder sonstige elektronische Einrichtungen aufgebracht und integriert werden. Dies bedeutet, dass der wesentliche Teil der Signalkette der bei den entsprechenden Messungen erzeugten Signale an der Sensorhaut selbst erzeugt, empfangen und verarbeitet wird und über mit der Sensorhaut verbundenen Kabel lediglich zu- bzw. abgeleitet wird. Neben den Sensoren/Transducern können an dem flexiblen Substrat über Schaltkreisintegration beispielsweise Multiplexer, eine Signalverarbeitungseinheit und ein sogenanntes Analog-Front-End angeordnet sein, wobei letzteres etwa Transmitter, Receiver, Verstärker und Filter sowie Digitizer enthalten kann. Insgesamt ist also hierbei der überwiegende Teil der Signalverarbeitungsausrüstung bereits an dem mit dem Bauteil verbundenen Substrat integriert.

Um eine zuverlässige Integration des Substrats an der Matrix des Bauteils aus faserverstärkten Kunststoff erreichen zu können, bildet bei dem erfindungsgemäß vorgesehenen Messsystem das Substrat eine Sensorfolie und ist aus einem thermoplastischen Hochleistungskunststoff hergestellt. Hierdurch kann das betreffende Substrat an dem Bauteil bereits bei dessen Herstellung mit der Bauteilmatrix verbunden werden. Hierbei handelt es sich um ein stoffschlüssiges Fügeverfahren, bei dem, gegebenenfalls unter Zuhilfenahme eines Adhesivmittels, etwa eines Klebers, die jeweiligen Strukturen miteinander verbunden werden, wobei es in der Regel zu einem Anlösen der Struktur des Substrats unter Wärmeeinfluss kommt, wodurch eine gute Anbindung an die unter demselben Wärmeeinfluss aushärtende Kunststoffmatrix des Bauteils gelingt.

Insbesondere kann das flexible Substrat mit dem Bauteil durch einen Co-bonding oder Co-curing-Prozess verbindbar oder verbunden sein. Dies bedeutet, dass vorzugsweise die stoffschlüssige Verbindung zwischen dem flexiblen Substrat und der Bauteilmatrix entweder durch eine hart in nass-Verklebung (Co-bonding) oder eine nass in nass-Verklebung (Co-curing) stattfindet, also jeweils Verfahren, bei denen zumindest einer der Fügepartner noch nicht ausgehärtet ist, sodass eine zuverlässige Gefügeverbindung zwischen Substrat und Bauteilmatrix bei geringen Toleranzen realisiert ist. Das flexible Substrat kann durch einen derartigen Prozess auch bei einem Fügen mehrerer Strukturelemente zu einem Gesamtbauteil zwischen den Strukturelementen integriert werden.

Eine zuverlässige Anordnung an dem jeweiligen Bauteil gelingt mit einem flexiblen Substrat, bei welchem der thermoplastische Hochleistungskunststoff aus einem Polyimid, insbesondere Polyethrimid, oder einem Polysulfon, insbesondere Polyethersulfon gebildet ist. Diese bilden jeweils geeignete Folienmaterialien, die bei dem jeweiligen Herstellungsprozess zuverlässig an die Kunststoffmatrix des Bauteils anbinden. Wird das flexible Substrat als Folie mittels eines Co-Bonding-Verfahrens an dem Bauteil integriert, so kann der hierbei eingesetzte Kleber derart angepasst sein, dass er der Impedanzanpassung für eine Ultraschallmessung dient, also der Anpassung des akustischen Impedanzunterschieds zwischen den verschiedenen Festkörpern, sodass hierüber ein verbessertes Signal-Rauschverhältnis erreicht werden kann.

Um die an dem flexiblen Substrat aufgebrachten Strukturen gegenüber ihrer Umgebung in einfacher Weise schützen zu können, ist das Substrat mit den daran angeordneten Strukturen mit wenigstens einer zusätzlich angeordneten Schicht, insbesondere einer mechanisch und/oder elektrisch isolierenden Schicht versehen. Wird bei einer bevorzugten Ausführung als flexibles Substrat und/oder für die aufgebrachten Schichten LCP (liquid crystal polymer) verwendet, kann man von einer erhöhten Lebensdauer ausgehen, da z.B. die Feuchteaufnahme sehr gering ist und von einer hohen Dimensionsstabilität auch bei erhöhten Temperaturen ausgegangen werden kann.

Offenbart wird hierin ferner die Verwendung einer Sensoranordnung an einer gekrümmten Fläche eines Bauteils aus einem faserverstärkten Kunststoff, wobei die Sensoranordnung an einem flexiblen Substrat aus einem thermoplastischen Hochleistungskunststoff gebildet wird, welches bei der Herstellung des Bauteils mit dessen Matrix verbunden wurde.

Falls die Lebensdauer der auf der Sensorfolie integrierten Elektronikkomponenten durch die bei der CFK-Bauteilfertigung herrschende hohe Temperatur zu stark verringert wird bzw. die Elektronikkomponenten geschädigt werden, können diese auch nachträglich aufgebracht und/oder ausgetauscht werden. Dies lässt sich bei der Erfindung vorteilhaft vereinfachen, indem Interposer vorgesehen werden, auf welche die Elektronikchips aufgesteckt werden können. Hierdurch sind die Abstände der Kontaktglieder flexibler handhabbar was zu einem robusteren Fertigungsprozess führt.

Bei der Herstellung des Bauteils werden an dem Substrat eine oder mehrere Interposerstrukturen angeordnet, die nach Abschluss der Bauteilherstellung mit Sensoren bestückt werden können.

Mit der Erfindung kann demnach eine Folie mit hoher Sensordichte und integrierter Elektronikfunktionalität, die an einem zu überwachenden Bauteil integriert ist, sowohl eine Prozessüberwachung zur Herstellung von faserverstärkten Kunststoffteilen, als auch die Schadensdetektion im Betrieb übernehmen. Hierdurch wird erreicht, dass mit einem einzigen System für Prozessüberwachung und Schadensselektion gearbeitet werden kann, wobei dank integrierter Elektronik im Wesentlichen überhaupt kein Verkabelungsaufwand zu treiben ist, und durch Einsatz eines etablierten Verfahrens (Puls Echoverfahren) eine einfache Signalauswertung und Schadenslokalisierung möglich ist.

Mit dem erfindungsgemäß vorgesehenen Messsystem ist auch eine Bauteil-Selbstüberwachung möglich, die Kontrolluntersuchungen ersetzt und Wartungsintervalle verlängert oder an bestimmten Stellen gegebenenfalls obsolet macht. Auch ein Einsatz in den Gebieten Retrofit/Repair bei Wartung und Instandhaltung insbesondere von Teilen der Luft- und Raumfahrt ist denkbar.

Die obigen Ausgestaltungen und Weiterbildungen lassen sich, sofern sinnvoll, beliebig miteinander kombinieren. Insbesondere könnte man hierbei an eine Kombination unterschiedlicher Sensoren an einer Sensorhaut denken, um die Verlässlichkeit der Messungen zu erhöhen. Auch ein Einsatz verschiedener Sensorhäute, beispielsweise an einer größeren Fläche hintereinander mit abwechselnden Sensoren angeordnet, wäre denkbar.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in der Zeichnung näher erläutert. In teilweise schematisierter Darstellung zeigen hierbei die
- Fig. 1: eine geschnittene Seitenansicht eines Messsystems mit einer Sensorhaut als flexiblem Substrat auf einem CFK-Bauteil mit Piezo-Sensoren;
- Fig. 2: eine perspektivische Seitenansicht einer Anordnung einer Sensorhaut mit elektronischen Bauteilen am parabolischen Profil einer Anströmkante einer Tragfläche.

In allen Figuren sind gleiche bzw. funktionsgleiche Elemente und Vorrichtungen - sofern nichts Anderes angegeben ist - mit denselben Bezugszeichen versehen worden.

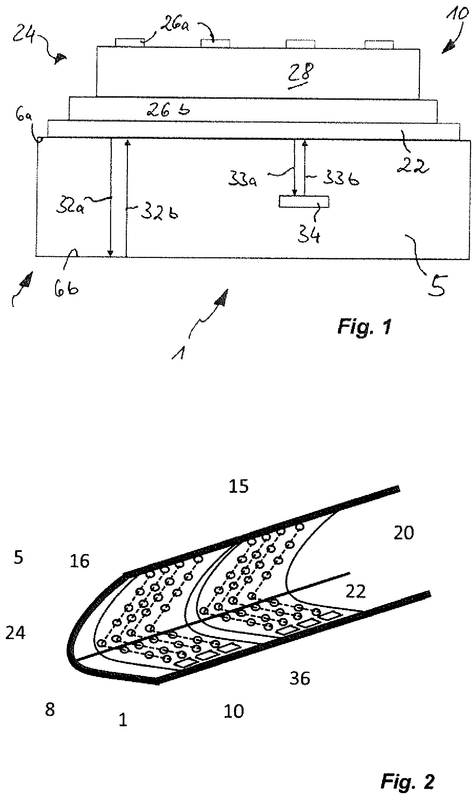

Die Figur 1 zeigt zunächst ein im Ganzen mit 1 bezeichnetes Messsystem zur Schadensermittlung an einem Bauteil 5 aus einem faserverstärkten Kunststoff. An der für den Betrachter oberen Seite des Bauteils 5 ist als Sensorhaut 20 eine Folie aus einem flexiblen Substrat 22 angeordnet, diese Sensorhaut 20 ist mit einer Mehrzahl von Sensoren 24 versehen, die an dem Substrat 22 eine Messeinrichtung 10 bilden. Dabei sind die Sensoren 24 durch auf dem flexiblen Substrat 22 aus einem Polyetherimid angeordnete Transducer gebildet. Diese wiederum bestehen aus zwei einander gegenüberliegenden Elektroden 26a, 26b, zwischen denen eine piezoelektrische Keramikfolie 28 angeordnet ist.

Diese Anordnung von Transducern als Sensoren 24 bildet an dem flexiblen Substrat 22 die Sensorhaut 20, die an einer Oberfläche des Bauteils 5 angeordnet ist. Mit den Sensoren 24 wird an dem Bauteil 5 zur Schadensdetektion ein Puls-Echoverfahren durchgeführt, was anhand der zwischen zwei gegenüberliegenden Seitenflächen 6a, 6b des Bauteils 5 hin- und herlaufenden Ultraschallwellen dargestellt ist, die durch Pfeile 32a, 32b, 33a, 33b angedeutet sind. Im linken Bereich der Figur 1 erkennt man dabei ungehindert zwischen den Seitenflächen 6a, 6b hin und her laufende Schallwellen 32a, 32b, während im rechten Bereich deren Laufzeit dadurch verkürzt ist, dass die Schallwellen 33a, 33b auf ihrem Weg durch das Kunststoffbauteil 5 auf eine Delamination 34 treffen und bereits dort reflektiert werden.

Dass auch die Signalverarbeitung an der Sensorhaut 20 bereits großenteils stattfindet, liegt an elektronischen Einrichtungen 36, die an dem flexiblen Substrat 22 aufgebracht und integriert sind, wie man in der Figur 2 erkennen kann. Dort dargestellt ist die Anströmkante 8 eines Abschnitts einer Tragfläche 15 eines Luftfahrzeugs. Deren parabolartiges Profil 16 ist an seiner Innenseite mit einer Mehrzahl von Sensorhäuten 20 versehen. Im vorliegenden Fall bilden die Sensorhäute 20 jeweils erkennbar eine gekrümmte Fläche an der Innenseite des Tragflächenprofils 16. An den Sensorhäuten 20 sind wiederum über die jeweilige Fläche gleichmäßig verteilt angeordnete Sensoren 24 zu erkennen, die an dem glasfaserverstärkten Bauteil 5 Ultraschallmessungen durchführen können.

Durch die in dem zuvor stattgefundenen Herstellungsprozess erreichte dauerhafte Verbindung zwischen den Sensorhäuten 20 und dem Bauteil 5 kann eine ununterbrochene Überwachung der strukturellen Integrität des betreffenden Bauteils 5 sowie die zugehörige Signalverarbeitung gewährleistet werden.

Dementsprechend betrifft also die vorstehend beschriebene Erfindung ein Messsystem 1 zur Schadensermittlung an Bauteilen 5 aus wenigstens einem faserverstärkten Kunststoff mit einer Mehrzahl von Sensoren 24, die an einem Bauteil 5 von einander beabstandet angeordnet sind, wobei die Sensoren 24 in Gebrauchsstellung über eine gekrümmte Fläche des Bauteils 5 verteilt sind.

Um ein Messsystem 1 zur Verfügung zu haben, mit dem sich bei Bauteilen 5 aus einem faserverstärkten Kunststoff mit vertretbarem Aufwand kostengünstig und zuverlässig Prozessparameter und/oder Zustandsgrößen bei Herstellung und Betrieb des Bauteils 5 gewinnen lassen, ist das Bauteil 5 mit einem bauteilfremden Substrat 22 versehen, an welchem die Sensoren 24 angeordnet sind, wobei das Substrat 22 flexibel ausgebildet ist und dass die an dem flexiblen Substrat 22 angeordneten Sensoren 24 eine Messeinrichtung 10 bilden. Erfindungsgemäß geht das flexible Substrat 22 darüber hinaus bei der Herstellung des Bauteils 5 mit dessen Matrix eine stoffschlüssige Verbindung ein.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren. Der Schutzumfang wird von den Ansprüchen definiert.

### Bezugszeichenliste

- 1: Messsystem
- 5: faserverstärktes Bauteil
- 6a, 6b: Seitenflächen des Bauteils
- 8: Anströmkante Tragfläche
- 10: Messeinrichtung
- 15: Tragfläche
- 16: Tragflächenprofil
- 20: Sensorhaut
- 22: flexibles Substrat
- 24: Sensor / Transducer
- 26a, 26b: Elektrode
- 28: piezoelektrische Keramikfolie
- 32a, 32b: Pfeile
- 33a, 33b: Pfeile
- 34: Delamination
- 36: elektrische Einrichtungen

## Patentansprüche

1. System, das ein Bauteil (5) aus wenigstens einem faserverstärkten Kunststoff und ein Messsystem (1) mit einer Mehrzahl von Sensoren (24), die an dem Bauteil (5) voneinander beabstandet angeordnet sind, aufweist, wobei die Sensoren (24) über eine gekrümmte Fläche des Bauteils (5) verteilt sind, wobei das Bauteil (5) mit einem bauteilfremden Substrat (22) versehen ist, an welchem die Sensoren (24) angeordnet sind, wobei das Substrat (22) flexibel ausgebildet ist, die an dem flexiblen Substrat (22) angeordneten Sensoren (24) eine Messeinrichtung (10) bilden und das mit den Sensoren (24) versehene flexible Substrat (22) eine Sensorhaut (20) bildet, wobei das flexible Substrat (22) eine Folie bildet, die aus einem thermoplastischen Hochleistungskunststoff gebildet ist, **dadurch gekennzeichnet, dass** das flexible Substrat (22) bei der Herstellung des Bauteils (5) mit dessen Matrix eine stoffschlüssige Verbindung eingeht und das mit der Matrix des Bauteils (5) verbundene flexible Substrat (22) an dessen Oberfläche angeordnet ist, wobei an der Sensorhaut (20) Mittel zur Signalverarbeitung vorgesehen sind, und wobei an dem Substrat (22) eine oder mehrere Interposerstrukturen angeordnet sind.

2. System nach Anspruch 1, **dadurch gekennzeichnet, dass** die Messeinrichtung (10) eingerichtet ist, um mit ihren Sensoren (24) den Herstellungsprozess und/oder der Betrieb des Bauteils (5) zu überwachen.

3. System nach einem der vorhergehenden Ansprüche, **dadurch gekennzeichnet, dass** die Mehrzahl von Sensoren (24) der Messeinrichtung (10) an dem flexiblen Substrat (22) als Ultraschall-Transducer ausgebildet ist.

4. System nach Anspruch 3, **dadurch gekennzeichnet, dass** die Ultraschall-Transducer als mikromechanisch hergestellte kapazitive Ultraschall-Transducer oder als piezoelektrische Dünnschicht ausgebildet sind.

5. System nach einem der vorhergehenden Ansprüche, **dadurch gekennzeichnet, dass** die Messeinrichtung (10) eingerichtet ist, um ein Puls/EchoVerfahren durchzuführen.

6. System nach einem der vorhergehenden Ansprüche, **dadurch gekennzeichnet, dass** die Messeinrichtung (10) eingerichtet ist, um mittels der Sensoren (24) eine kapazitive Messung durchzuführen.

7. System nach einem der vorhergehenden Ansprüche, **dadurch gekennzeichnet, dass** die Messeinrichtung (10) an dem Substrat (22) in deren beiden flächigen Erstreckungsrichtungen eine Matrix von in diesen Richtungen jeweils gleichmäßig beabstandeten Sensoren (24), insbesondere in den beiden Richtungen mit identischem Abstand angeordneten Sensoren (24) bildet.

8. System nach einem der vorhergehenden Ansprüche, **dadurch gekennzeichnet, dass** an dem flexiblen Substrat (22) Leiterbahnen, Multiplexer, oder sonstige elektronische Einrichtungen (36) aufgebracht und integriert sind.

9. System nach einem der vorhergehenden Ansprüche, **dadurch gekennzeichnet, dass** das flexible Substrat (22) durch einen Co-Bonding- oder Co Curing- Prozess mit dem Bauteil verbindbar oder verbunden ist.

10. System nach einem der vorhergehenden Ansprüche, **dadurch gekennzeichnet, dass** der thermoplastische Hochleistungskunststoff aus einem Polyimid, insbesondere Polyetherimid, oder einem Polysulfon, insbesondere Polyethersulfon, gebildet ist.

11. System nach einem der vorhergehenden Ansprüche, **dadurch gekennzeichnet, dass** an dem flexiblen Substrat (22) aufgebrachte Strukturen durch wenigstens eine zusätzlich angeordnete Schicht gegenüber ihrer Umgebung schützbar oder geschützt sind.

12. System nach einem der vorhergehenden Ansprüche, **dadurch gekennzeichnet, dass** das flexible Substrat und/oder die zusätzlich angeordnete Schicht als Flüssigkristallpolymer (LCP) ausgebildet sind.

13. System nach einem der vorhergehenden Ansprüche, **dadurch gekennzeichnet, dass** die eine oder mehrere Interposerstrukturen nach Abschluss der Bauteilherstellung mit Sensoren bestückt sind.

## Claims

1. System comprising a component (5) made of at least one fibre-reinforced plastic and a measuring system (1) with a plurality of sensors (24), which are arranged spaced apart from one another on the component (5), wherein the sensors (24) are distributed over a curved surface of the component (5), wherein the component (5) is provided with a substrate (22) which is different from the component and on which the sensors (24) are arranged, wherein the substrate (22) is flexibly formed, the sensors (24) arranged on the flexible substrate (22) form a measuring device (10) and the flexible substrate (22) provided with the sensors (24) forms a sensor skin (20), wherein the flexible substrate (22) forms a film which is formed from a high-performance thermoplastic, **characterized in that**, during the production of the component (5), the flexible substrate (22) enters into a materially-bonding connection and the flexible substrate (22) connected to the matrix of the component (5) is arranged on its surface, wherein signal processing means are provided on the sensor skin (20), and wherein one or more interposer structures are arranged on the substrate (22) .

2. System according to Claim 1, **characterized in that** the measuring device (10) is designed to monitor with its sensors (24) the production process and/or the operation of the component (5).

3. System according to one of the preceding claims, **characterized in that** the plurality of sensors (24) of the measuring device (10) on the flexible substrate (22) are formed as ultrasonic transducers.

4. System according to Claim 3, **characterized in that** the ultrasonic transducers are formed as micromechanically produced capacitive ultrasonic transducers or as a piezoelectric thin layer.

5. System according to one of the preceding claims, **characterized in that** the measuring device (10) is designed to perform a pulse/echo process.

6. System according to one of the preceding claims, **characterized in that** the measuring device (10) is designed to perform a capacitive measurement by means of the sensors (24).

7. System according to one of the preceding claims, **characterized in that**, in both of its directions of two-dimensional extent, the measuring device (10) on the substrate (22) forms a matrix of sensors (24) that are respectively evenly spaced in these directions, in particular sensors (24) arranged at identical distances in the two directions.

8. System according to one of the preceding claims, **characterized in that** conductor tracks, multiplexers or other electronic devices (36) are applied and integrated on the flexible substrate (22).

9. System according to one of the preceding claims, **characterized in that** the flexible substrate (22) can be connected or is connected to the component by a co-bonding or co-curing process.

10. System according to one of the preceding claims, **characterized in that** the high-performance thermoplastic is formed from a polyimide, in particular polyetherimide, or a polysulfone, in particular polyethersulfone.

11. System according to one of the preceding claims, **characterized in that** structures applied to the flexible substrate (22) can be protected or are protected from their surroundings by at least one additionally arranged layer.

12. System according to one of the preceding claims, **characterized in that** the flexible substrate and/or the additionally arranged layer are formed as a liquid-crystal polymer (LCP).

13. System according to one of the preceding claims, **characterized in that** the one or more interposer structures are fitted with sensors after completion of the production of the component.

## Revendications

1. Système présentant un composant (5) d'au moins une matière plastique renforcée par des fibres, et un système de mesure (1) pourvu d'une pluralité de capteurs (24) qui sont disposés sur le composant (5) de manière espacée les uns des autres, dans lequel les capteurs (24) sont répartis sur une surface courbe du composant (5), dans lequel le composant (5) est muni d'un substrat (22) externe au composant et sur lequel sont disposés les capteurs (24), dans lequel le substrat (22) est réalisé de manière flexible, les capteurs (24) disposés sur le substrat flexible (22) forment un dispositif de mesure (10), et le substrat flexible (22) muni des capteurs (24) forme une peau sensorielle (20), dans lequel le substrat flexible (22) forme un film qui est formé par une matière thermoplastique haute performance, **caractérisé en ce que** lors de la fabrication du composant (5), le substrat flexible (22) crée un assemblage par liaison de matière avec la matrice de celui-ci, et le substrat flexible (22) relié à la matrice du composant (5) est disposé sur la surface de celui-ci, dans lequel des moyens de traitement de signal sont prévus sur la peau sensorielle (20), et dans lequel une ou plusieurs structures d'interposition sont disposées sur le substrat (22).

2. Système selon la revendication 1, **caractérisé en ce que** le dispositif de mesure (10) est conçu pour surveiller par ses capteurs (24) le processus de fabrication et/ou le fonctionnement du composant (5).

3. Système selon l'une quelconque des revendications précédentes, **caractérisé en ce que** la pluralité de capteurs (24) du dispositif de mesure (10) est réalisée sur le substrat flexible (22) sous forme de transducteur à ultrasons.

4. Système selon la revendication 3, **caractérisé en ce que** les transducteurs à ultrasons sont réalisés sous forme de transducteurs à ultrasons capacitifs fabriqués de manière micromécanique ou sont réalisés sous forme de couche mince piézoélectrique.

5. Système selon l'une quelconque des revendications précédentes, **caractérisé en ce que** le dispositif de mesure (10) est conçu pour effectuer un procédé à impulsion/ par écho.

6. Système selon l'une quelconque des revendications précédentes, **caractérisé en ce que** le dispositif de mesure (10) est conçu pour effectuer une mesure capacitive au moyen des capteurs (24).

7. Système selon l'une quelconque des revendications précédentes, **caractérisé en ce que** le dispositif de mesure (10) forme sur le substrat (22) dans ses deux directions d'extension planes une matrice de capteurs (24) respectivement espacés de manière régulière dans ces directions, en particulier des capteurs (24) disposés à distance identique dans les deux directions.

8. Système selon l'une quelconque des revendications précédentes, **caractérisé en ce que** des pistes conductrices, des multiplexeurs ou d'autres dispositifs électroniques (36) sont appliqués et intégrés sur le substrat flexible (22).

9. Système selon l'une quelconque des revendications précédentes, **caractérisé en ce que** le substrat flexible (22) peut être ou est relié au composant par un processus de co-liaison ou de co-durcissement.

10. Système selon l'une quelconque des revendications précédentes, **caractérisé en ce que** la matière thermoplastique haute performance est formée à partir d'un polyimide, en particulier d'un polyétherimide, ou d'un polysulfone, en particulier d'un polyéthersulfone.

11. Système selon l'une quelconque des revendications précédentes, **caractérisé en ce que** des structures appliquées sur le substrat flexible (22) peuvent être ou sont protégées par rapport à leur environnement par au moins une couche disposée en plus.

12. Système selon l'une quelconque des revendications précédentes, **caractérisé en ce que** le substrat flexible et/ou la couche disposée en plus sont réalisés sous forme de polymère à cristaux liquides (LCP).

13. Système selon l'une quelconque des revendications précédentes, **caractérisé en ce que** ladite une ou les plusieurs structures d'interposition sont garnies de capteurs après la fin de la fabrication du composant.
